# EUROPÄISCHE PATENTSCHRIFT

(11) **EP 1 490 799 B1**
(45) Veröffentlichungstag und Bekanntmachung des Hinweises auf die Patenterteilung: **07.03.2007**
(21) Anmeldenummer: 03724841.6
(22) Anmeldetag: 24.03.2003
(51) Int. Cl.: G06F 17/30, G05B 19/418, H04L 29/06

(54) **WEBSERVER MIT INTEGRIERTER AUTOMATISIERUNGSFUNKTIONALITÄT UND DIREKTEM ZUGRIFF AUF EINE TRANSPORTSCHICHT**
WEB SERVER WITH INTEGRATED AUTOMATIC FUNCTIONALITY AND DIRECT ACCESS TO A TRANSPORT LAYER
SERVEUR WEB PRESENTANT UNE FONCTIONNALITE D'AUTOMATISATION INTEGREE ET UN ACCES DIRECT A UNE COUCHE TRANSPORT

(30) Priorität: 02.04.2002 DE 10214538
(43) Veröffentlichungstag der Anmeldung: 29.12.2004
(60) Teilanmeldung: 06017049.5
(73) Patentinhaber: SIEMENS AKTIENGESELLSCHAFT, 80333 München (DE)
(72) Erfinder: PAVLIK, Rolf-Dieter, 91058 Erlangen (DE); ROSSI, Gernot, 91245 Simmelsdorf (DE); VOLKMANN, Frank, 90475 Nürnberg (DE)
(86) Internationale Anmeldenummer: PCT/DE2003/000965
(87) Internationale Veröffentlichungsnummer: WO 2003/083711

(56) Entgegenhaltungen:
- WO-A-00/76130
- WO-A-99/46746
- GB-A- 2 360 608
- US-B1- 6 311 101

## Beschreibung

Die Erfindung betrifft einen Webserver mit in den Webserver integrierten Softwaremodulen sowie ein Automatisierungssystem bzw. ein Computerprogrammprodukt mit einem solchen Webserver.

Server, welche über das Internet mit Clients verbunden sind und diesen Informationen, üblicherweise Internetseiten, zur Verfügung stellen, werden Webserver genannt. Ein solcher Webserver ist eine Applikation, welche auf einem oder auf mehreren Rechnern verteilt abläuft. Auf dem Webserver werden Daten zentral gespeichert, welche von vielen verschiedenen Clients verwendet werden können, unabhängig vom jeweiligen Standort eines Clients. Als Webserver wird sowohl die auf einem Rechner ablaufende Softwareapplikation als auch der Rechner selbst bezeichnet. Webserver dienen heute als universeller Informationslieferant im Internet, aber auch in lokalen Netzen, die auf Internettechnologien aufsetzen. Hierbei wird oft die Möglichkeit von Erweiterungsmodulen der Webserver Gebrauch gemacht, z.B. um Zugriff auf Datenbanken, Formulare etc. zu ermöglichen. Die Kommunikation zwischen Client und Webserver läuft üblicherweise gemäß dem HTTP-Protokoll (HTTP = Hyper Text Transfer Protocol) ab.

Die US 6 061 603 A beschreibt ein Steuerungssystem, welches einem Anwender ermöglicht, eine speicherprogrammierbare Steuerung über ein Kommunikationsnetz wie z. B. das Internet mittels eines Webbrowsers zu erreichen. Das System enthält eine Schnittstelle zwischen dem Netzwerk und der speicherprogrammierbaren Steuerung. Dieses so genannte Webinterface bietet Internetseiten von einer Ethernetschnittstelle der speicherprogrammierbaren Steuerung an und enthält einen HTTP-Protokoll-Interpreter und einen TCP/IP-Stack (TCP/IP = Transmission Control Protocol/Internet Protocol). Das Webinterface bietet einem entfernten Anwender somit über das Internet Zugriff auf die speicherprogrammierbare Steuerung.

Aus der GB 2 360 608 A ist ein Mikrocontroller bekannt, welcher sowohl Webserver-Funktionen als auch generische Steuerungs- und Überwachungsfunktionen zur Verfügung stellt. Integrierte Software für die Fernüberwachung von Hardware mit Mitteln des Mikrocontrollers kombiniert Steuerungscode und HTTP-Server-Code.

Die WO99/46746 beschreibt ein elektronisches Messgerät, welches eine TCP/IP-Scbnittstelle aufweist und einen HTTP-Server, welcher für den Zugriff auf das Messgerät in einem Gateway enthalten ist, welches mit einer Mehrzahl von Messgeräten mittels Power Line oder einem drahtlosen Netzwerk verbunden ist.

Die US 6,311,101 B1 beschreibt ein Verfahren zur Fernüberwachung einer Spritzgießmaschine. Die Spritzgießmaschine weist eine speicherprogrammierbare Steuerung mit mindestens einer CPU zur Ansteuerung von Aktoren der Spritzgießmaschine in Echtzeit auf. Zudem werden Daten zwischen der Spritzgießmaschine und einer Fernüberwachungsstation an einem entfernten Standort übermittelt. Zusätzlich zur Echtzeitsteuerung der Aktoren der Spritzgießmaschine weist die speicherprogrammierbare Steuerung einen Webserver auf. Der Webserver dient zur Kommunikation mit der Fernüberwachungsstation.

Die WO 00/76130 A1 beschreibt ein Verfahren zur Ansteuerung von Geräten in einem Haushaltsnetzwerk durch ein Steuerungsmittel über einen so genannten Home Access Server. Dabei stellt der Home Access Server eine Vielzahl von generischen Steuerungsseiten für jeden funktionalen Komponententyp entsprechend einer Netzwerkspezifikation zur Verfügung.

Der Erfindung liegt die Aufgabe zugrunde, eine Lösungsmöglichkeit zur Realisierung einer Automatisierungsfunktionalität aufzuzeigen, welche verschiedene Kommunikationsarten unterstützt.

Diese Aufgabe wird mit einem Webserver mit den Merkmalen gemäß Patentanspruch 1 gelöst.

Der Erfindung liegt die Erkenntnis zugrunde, dass die klassische Automatisierungswelt heute wenige Berührungspunkte mit dem Internet hat, da in der Automatisierungstechnik überwiegend mit proprietären Protokollen gearbeitet wird. Die Entwicklung der Webtechnologie schreitet jedoch voran, ohne dass Fragestellungen der Automatisierungstechnik berücksichtigt werden. Die bisherigen Ansätze, eigene Webserverfunktionalität in die Automatisierungskomponenten zu integrieren, basieren wiederum auf proprietären Lösungen der einzelnen Komponenten. Zudem erwies sich die Leistungsfähigkeit derartiger Lösungen als sehr beschränkt. Der erfindungsgemäße Webserver verbindet auf überraschende Weise die Webtechnologie mit der Automatisierungstechnik, indem ein direkt in den Webserver integriertes Erweiterungsmodul, in der Regel ein Softwaremodul, die geforderte Automatisierungsfunktionalität zur Verfügung stellt. Ein solchermaßen in der Funktionalität erweiterter Webserver kann sowohl komplexe Aufgaben der klassischen Automatisierungstechnik als auch kleinere Aufgabenstellungen z.B. im Consumer-Bereich bearbeiten. Durch die direkte Integration der Automatisierungsfunktionalität in den Webserver lassen sich vorhandene Web-Implementierungen auch bei der Bearbeitung der Automatisierungsaufgabe nutzen. Die zweiten Mittel des ersten Softwaremoduls zum direkten Zugriff auf eine Transportschicht eröffnen zusätzlich einen von Webtechnologien unabhängigen Kommunikationsweg.

Durch die Verbindung des erfindungsgemäßen Webservers mit einem Kommunikationsnetzwerk, insbesondere dem Internet, werden zum einen Internet-Technologien der Automatisierungstechnik zugänglich und zum anderen wird eine durchgängige Anbindung der Automatisierungskomponenten an das Kommunikationsnetzwerk bzw. das Internet erreicht.

Die Verwendung von Internet-Protokollen zur Kommunikation der Softwaremodule untereinander und zur Kommunikation der Softwaremodule mit Komponenten außerhalb des Webservers ermöglicht die Vereinheitlichung der Komponenten des Webservers hinsichtlich ihrer Kommunikationsschnittstellen. Die Erweiterung des Webservers mit weiteren Modulen wird erleichtert, da diese ohne aufwendige Anpassung an proprietäre Protokolle verwendet werden können. Beispiele für übliche Internet-Protokolle sind HTTP und FTP (File Transfer Protocol).

In einer vorteilhaften Ausgestaltung der Erfindung ist der Webserver zur Konfiguration und Administration der Softwaremodule vorgesehen.

Der erfindungsgemäße Webserver ist leicht skalierbar und somit gemäß einer weiteren vorteilhaften Ausgestaltung zur Ansteuerung der Komponenten eines industriellen Automatisierungssystems einsetzbar, wenn das erste Softwaremodul eine Verbindung zum industriellen Automatisierungssystem aufweist.

Um verfügbare Internet-Sicherheitsmechanismen zu nutzen, wird vorgeschlagen, dass der Webserver über einen Firewall eine Verbindung mit dem Internet aufweist. Bei den bereits üblichen in eine Automatisierungskomponente integrierten Webservererweiterungen sind die im Internet geforderten Sicherheitsmechanismen aufgrund der engen Freiräume in der Regel nicht realisierbar.

Die Verbindung des Webservers mit einem Kommunikationsnetzwerk, insbesondere dem Internet, kann vorteilhaft zur Unterstützung der Automatisierungsfunktionalität genutzt werden, wenn der Webserver über ein Kommunikationsnetzwerk mit einem Webbrowser als Bedien- und Beobachtungssystem für das von dem ersten Softwaremodul angesteuerte Automatisierungssystem verbunden ist. Dieses Bedien- und Beobachtungssystem kann auch zur Projektierung, zur Programmierung, zur Durchführung von Software-Updates, also allgemein zur Datenkommunikation und Datenrepräsentation genutzt werden.

Um die Nutzung von Webtechnologien auch für Echtzeit-Anwendungen zu ermöglichen, wird vorgeschlagen, dass der Webserver ein Echtzeit-Betriebssystem aufweist. Insbesondere beim Einsatz in der Prozessautomatisierung müssen die verwendeten Automatisierungskomponenten echtzeitfähig sein. Durch Kopplung des ersten Softwaremoduls mit dem Echtzeit-Betriebssystem kann diese Anforderung erfüllt werden. Das Echtzeit-Betriebssystem kann zusätzlich zu einem nicht-echtzeitfähigen Betriebssystem(teil) oder als alleiniges Betriebssystem eingesetzt werden.

Nachfolgend wird die Erfindung anhand der in den Figuren dargestellten Ausführungsbeispiele näher beschrieben und erläutert.

Es zeigen:
- FIG 1: ein System mit über das Internet verbundenen Webservern, welche unterschiedliche Aufgaben erfüllen,
- FIG 2: einen Webserver mit Automatisierungsfunktionalität,
- FIG 3: eine schematische Ansicht des Aufbaus eines Webservers mit Automatisierungsfunktionalität,
- FIG 4: ein System mit über das Internet und eine proprietäre Verbindung verbundenen Webservern und
- FIG 5: ein System mit kombiniertem Einsatz eines Webservers mit Automatisierungsfunktionalität, eines Automatisierungsgeräts und eines klassischen Webservers ohne Automatisierungsfunktionalität.

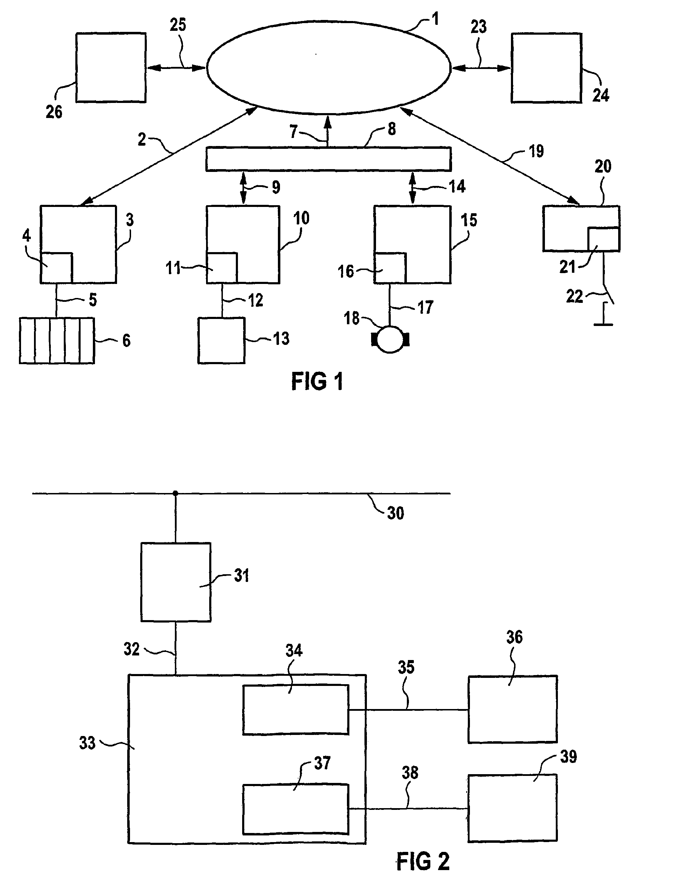

FIG 1 zeigt verschiedene Webserver 3, 10, 15, 20, 24, welche direkt oder indirekt über das Internet 1 miteinander verbunden sind. Ein erster Webserver 3 kommuniziert direkt über eine Verbindung 2 mit dem Internet 1. Der erste Webserver 3 enthält ein Erweiterungsmodul 4, welches über eine Verbindung 5 mit einem Eingabe-/Ausgabemodul 6 eines Automatisierungssystems verbunden ist. Ein zweiter und ein dritter Webserver 10, 15 sind über Verbindungen 9, 14, einen Firewall 8 und eine Verbindung 7 mit dem Internet 1 verbunden. Der zweite Webserver 10 weist ein Erweiterungsmodul 11 auf, welches eine Verbindung 12 zu einem Umrichter 13 aufweist. Der dritte Webserver 15 enthält ein Erweiterungsmodul 16, welches über eine Verbindung 17 einen Antrieb 18 ansteuert. Mit dem Bezugszeichen 20 ist ein vierter Webserver, ein so genannter embedded Webserver **gekennzeichnet,** welcher direkt über eine Verbindung 19 mit dem Internet 1 verbunden ist und ein Erweiterungsmodul 21 aufweist, welches ein Ventil 22 ansteuert. Der in FIG 1 dargestellte fünfte Webserver 24 besitzt keinerlei Automatisierungsfunktionalität und kommuniziert mit dem Internet über eine Verbindung 23. Ein Webbrowser 26 ist über eine Verbindung 25 an das Internet 1 angeschlossen.

Im Folgenden soll die der Erfindung zugrunde liegende Idee anhand FIG 1 erläutert werden. Ein Webserver ist ein Prozess auf einem Rechner - oder auch verteilt über mehrere Rechner - und versorgt üblicherweise sehr viele Clients (Webbrowser auf verschiedenen Geräten) mit Informationen. Diese Informationen können sich entweder statisch auf dem Webserver befinden oder aber auch dynamisch von weiteren Dienstprogrammen erzeugt werden. Übliche über das Internet 1 verbundene Kommunikationspartner sind also Webserver in der Ausgestaltung des fünften Webservers 24 und Webbrowser 26. Der fünfte Webserver 24 stellt Informationen, im Allgemeinen Internetseiten, auf Anfrage eines Webbrowsers 26 über das Internet 1 zur Verfügung.

Die Idee der Erfindung liegt nun darin, einen solchen standardmäßigen Webserver durch Erweiterung mittels Softwaremodule so auszugestalten, dass er auch Automatisierungsaufgaben lösen kann. Der erste Webserver 3 enthält ein Erweiterungsmodul 4, welches die Aufgaben einer speicherprogrammierbaren Steuerung (SPS) übernimmt. Das Erweiterungsmodul 4 als Teil des Webservers 3 ist dazu mit einer Verbindung 5 mit einem Eingabe-/Ausgabemodul eines Automatisierungssystems verbunden. Der erste Webserver 3 dient somit nicht nur der Informationsbereitstellung über die Verbindung 2 ins Internet 1, sondern kann durch die Integration des Erweiterungsmoduls 4 komplexe Steuerungsaufgaben ausführen, welche beim bisherigen Stand der Technik nur durch eigenständige speicherprogrammierbare Steuerungen ausführbar waren. Ein weiteres Ausführungsbeispiel des erfindungsgemäßen Webservers zeigt FIG 1 im zweiten Webserver 10, welcher ein Erweiterungsmodul 11 mit CNC-Funktionalität (CNC = Computer Numerical Controlled) aufweist. Der zweite Webserver 10 steuert über das Erweiterungsmodul 11 eine computergesteuerte Werkzeugmaschine 13 (CNC-Werkzeugmaschine), welche zur schnellen und genauen Herstellung von komplizierten Dreh- und Frästeilen dient. Derartig komplizierte Steuerungen werden üblicherweise durch eigens dafür spezifizierte Rechner ausgeführt. Als ähnlich komplexe Steuerungsaufgabe erweist sich die Steuerung eines Antriebs 18, welcher der dritte Webserver 15 im Ausführungsbeispiel übernimmt. Dazu enthält er ein Erweiterungsmodul 16, welches die anspruchsvollen Aufgaben der Steuerung bzw. Regelung des Antriebs 18 übernimmt. Um die Vorteile der Nutzung von Webtechnologien durch den zweiten und den dritten Webserver 10, 15 nicht durch den Nachteil mangelnder Sicherheit zu erkaufen, sind die Webserver 10, 15 über einen Firewall 8 mit dem Internet 1 verknüpft. Der Firewall 8 verhindert effektiv unzulässige Zugriffe über eine Kommunikationsverbindung 7 auf einen der Webserver und damit auf den Antrieb 18 oder die Werkzeugmaschine 13. Bei einem weiteren in FIG 1 dargestellten Ausführungsbeispiel der Erfindung ist der Webserver mit Automatisierungsfunktionalität ein so genannter embedded Webserver 20, welcher als Erweiterungsmodul 21 einen Temperaturregler zur Ansteuerung eines Ventils 22 enthält. Dieser embedded Webserver 20 ist beispielsweise als Single-Chip-Lösung innerhalb eines Personal Computers (PC) realisiert. Jeder der beschriebenen Webserver 3, 10, 15 bzw. 20 bietet neben der Automatisierungsfunktionalität der Erweiterungsmodule auch sämtliche Funktionalitäten und damit sämtliche Vorteile eines standardmäßigen Webservers 24. Der über das Internet 1 angebundene Webbrowser 26 kann somit auch auf die mit Automatisierungsfunktionalität erweiterten Webserver 3, 10, 15 und 20 mit Webtechnologien zugreifen und so z.B. als Bedien- und Beobachtungssystem eingesetzt werden. Die in FIG 1 dargestellten Ausführungsbeispiele zeigen deutlich die im Gegensatz zu herkömmlichen Ansätzen bessere Skalierbarkeit der hier vorgeschlagenen Lösung. Der Webserver kann als Single Chip Webserver mit Hardware-Anbau (z. B. im Consumer-Bereich) bis hin zum Hochleistungswebserver mit SoftPLC und Office Software ausgeführt werden.

FIG 2 zeigt ein Ausführungsbeispiel eines Webservers mit Automatisierungsfunktionalität in schematischer Ansicht. Ein Webserver 33 ist über eine Verbindung 32 und einen TCP/IP-Stack 31 mit einer TCP/IP-Verbindung 30 verbunden. Der Webserver 33 enthält ein erstes Erweiterungsmodul 34, welches als Datenbankmodul ausgeführt ist und mittels einer Verbindung 35 Zugriff auf einen SQL7-Server 36 (SQL = Structured Query Language) hat. Ein zweites Erweiterungsmodul 37 besitzt Automatisierungsfunktionalität und kommuniziert über eine Verbindung 38 mit einem Industrieprozess 39. Das Erweiterungsmodul 37, ein Softwaremodul, wird über eine hier nicht dargestellte Schnittstelle an die Verbindung 38 und damit an die Hardware-Komponenten des Automatisierungssystems zur Steuerung des Industrieprozess 39 angekoppelt. Der TCP/IP-Stack steuert als vorgeschaltete Software die Zugriffe auf eine hier nicht dargestellte Netzwerkkarte, welche Zugriff auf die TCP/IP-Verbindung 30 hat, und stellt den zugreifenden Prozessen das TCP/IP-Protokoll zur Verfügung.

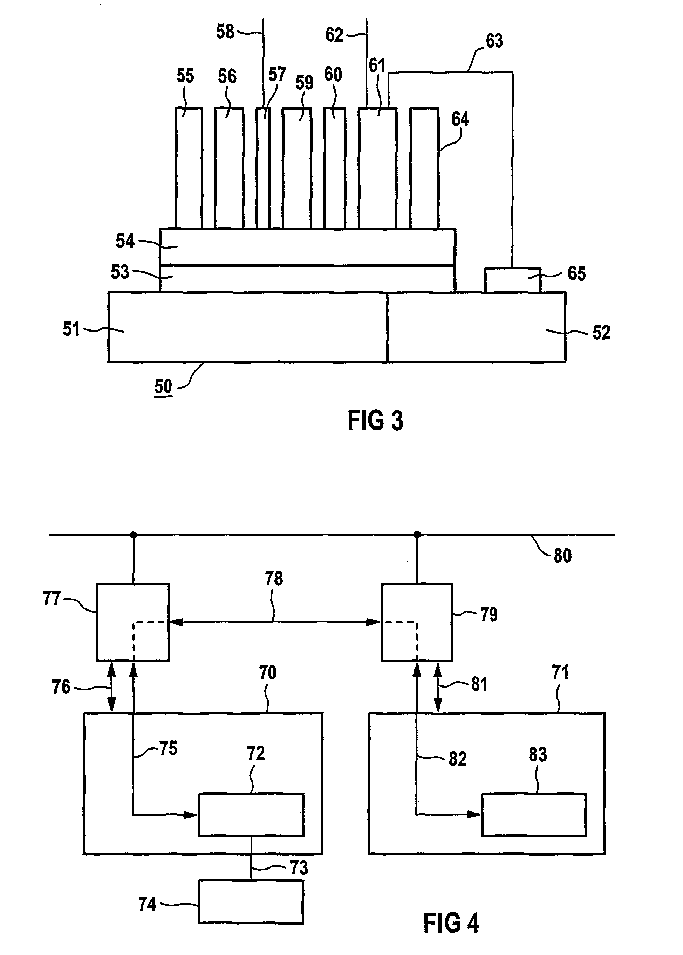

FIG 3 zeigt die schematische Ansicht des Aufbaus eines weiteren Ausführungsbeispiels eines Webservers mit Automatisierungsfunktionalität. Dargestellt sind Softwarekomponenten des Webservers. Ein Betriebssystem 50 des Rechners auf dem der Webserver läuft enthält ein Standard-Betriebssystem 51 sowie ein Echtzeit-Betriebssystem 52. Ein Webserver-Kernel 54 ist auf das unterlagerte Betriebssystem 50 mittels einer Portierung 53 aufgesetzt. Der Webserver-Kernel 54 stellt standardisierte Schnittstellen für die Ankopplung der Softwarekomponenten zur Verfügung und ist die Basis für verschiedene Software-Erweiterungsmodule. Ein erstes Erweiterungsmodul 55 dient der Bereitstellung von Webseiten, ein zweites Erweiterungsmodul 56 dient als XML-Parser. Mit einem dritten Erweiterungsmodul 57 wird ein Profibusanschluss 58 angebunden. Ein viertes Erweiterungsmodul 59 bietet Java-Funktionalität, ein fünftes Erweiterungsmodul 60 verarbeitet Signale einer Webcam. Ein sechstes Erweiterungsmodul 64 dient der Verarbeitung von XML-Daten. Ein siebtes Erweiterungsmodul 61 mit Automatisierungsfunktionalität weist eine Verbindung 62 zu einem Prozess und eine Verbindung 63 zu einem Interface 65 zum Echtzeit-Betriebssystem 52 auf. Ein System gilt als echtzeitfähig, wenn es innerhalb einer benenn- und garantierbaren Zeit auf zufällige, externe Ereignisse reagieren kann. In industriellen Automatisierungssystemen sind Reaktionszeiten im Mikrosekundenbereich üblich und erforderlich. Echtzeitprozesse können alle Dienste nutzen, die auch anderen Prozessen zur Verfügung stehen.

Das Betriebssystem 50 hat direkten Zugriff auf die Ressourcen des Rechners, wie z.B. Speicher und Rechenzeit. Wird ein Kommando abgeschickt oder ein Programm aufgerufen, so wird der benötigte Programmcode in einen Hauptspeicher geladen und als Prozess gestartet. Prozesse haben keinen Zugriff auf die Ressourcen, sie fordern diese jeweils vom Betriebssystem an. Durch die direkte Integration der Automatisierungsfunktionalität als siebtes Erweiterungsmodul 61 in den Webserver werden die Leistung, die Dienste (z.B. Autotopologie, SSDP, SNMP, E-Mail etc.) und die Offenheit des Internets der Automatisierungswelt zugänglich gemacht und die weiteren, oben beschriebenen Vorteile erreicht. Das siebte Erweiterungsmodul 61 realisiert einerseits die Automatisierungslösung und tauscht andererseits Informationen über den Webserver aus und wird durch diesen konfiguriert und administriert. Im Gegensatz dazu ist bei einer so genannten SoftPLC (= Softwaresimulation einer speicherprogrammierbaren Steuerung) die Automatisierungsfunktion nicht in den Server integriert, sondern parallel zu diesem installiert, eventuell über eine Kommunikationsschnittstelle angebunden. Integration in den Server bedeutet insbesondere, dass ein Erweiterungsmodul direkt durch den Webserver geladen, konfiguriert, gestartet und beendet wird. Ein solches Erweiterungsmodul wird häufig auch als "Extension" bezeichnet. Der Webserver-Kernel 54 des erfindungsgemäßen Webservers dient als gemeinsame Plattform für die Erweiterungsmodule. Dies erleichtert insbesondere die Konfiguration der Software-Erweiterungsmodule und deren Wiederverwendung in anderen Applikationen. Die Anbindung der Erweiterungsmodule erfolgt nicht mit proprietären oder ausprogrammierten Schnittstellen, sondern mit standardisierten Schnittstellen, beispielsweise API (Application Programming Interface) oder CGI (Common Gateway Interface). API ist eine formal definierte Schnittstelle, über die Anwendungsprogramme Systemdienste (Netz, Betriebssystem etc.) oder Dienstleistungen anderer Anwendungsprogramme verwenden können. CGI beschreibt eine Standard-Schnittstelle zwischen einem Webserver und Programmen. Das siebte Erweiterungsmodul 61 weist als Mittel zur Realisierung einer Automatisierungsfunktionalität Regelungs- und/oder Steuerungsmittel zur Regelung und/oder Steuerung von Komponenten sowie Prozessen eines Automatisierungssystems auf. Diese Regelungs- und Steuerungsmittel zur Ansteuerung eines Automatisierungssystems sind üblicherweise als im Erweiterungsmodul ablauffähige Softwareprozesse ausgebildet.

FIG 4 zeigt ein System mit über das Internet 80 und eine proprietäre Verbindung 78 verbundenen Webservern 70, 71. Ein Webserver 70 mit Automatisierungsmodul 72 ist über eine Verbindung 76 und seinen TCP/IP-Stack 77 mit dem Internet 80 verbunden. Das Automatisierungsmodul 72 kommuniziert über eine Verbindung 73 mit einem Industrieprozess 74. Das in den Webserver integrierte Automatisierungsmodul 72 hat zusätzlich mit der Verbindung 75 einen direkten Zugriff auf eine Kommunikationsverbindung der Transportschicht. Das Automatisierungsmodul 72 wird also um den Zugriff auf die Transportebene/-schicht erweitert. Das ist in der Regel der TCP/IP-Stack in der vierten Schicht (auch "Schicht 4" genannt) des unten beschriebenen ISO/OSI-Modells . Eine Verbindung 78 der Transportschicht zwischen dem TCP/IP-Stack 77 des Webservers 70 und dem TCP/IP-Stack 79 eines weiteren Webservers 71 dient der Kommunikation mittels eines proprietären Protokolls, z.B. eines TCP/IP-basierten Protokolls (z.B. Ethernet, Profibus). Der Webserver 71 weist ebenfalls ein Automatisierungsmodul 83 auf, welches über eine Verbindung 82 mit dem TCP/IP-Stack 79 gekoppelt ist.

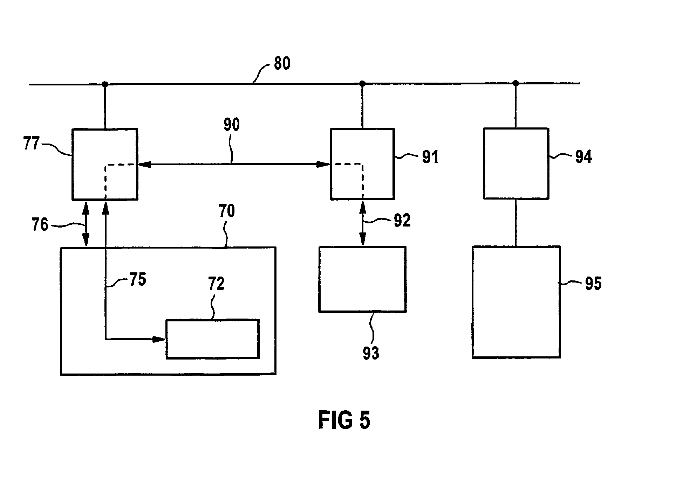

FIG 5 zeigt ein System mit kombiniertem Einsatz eines Webservers 70 mit Automatisierungsfunktionalität, eines Automatisierungsgeräts 93 und eines klassischen Webservers 95 ohne Automatisierungsfunktionalität. Ein Webserver 70 mit Automatisierungsmodul 72 ist über eine Verbindung 76 und seinen TCP/IP-Stack 77 mit dem Internet 80 verbunden. Das in den Webserver integrierte Automatisierungsmodul 72 hat zusätzlich mit der Verbindung 75 einen direkten Zugriff auf eine Kommunikationsverbindung der Transportschicht. Eine Verbindung 90 der Transportschicht zwischen dem TCP/IP-Stack 77 des Webservers 70 und dem TCP/IP-Stack 91 eines Automatisierungsgeräts 93 dient der Kommunikation mittels eines proprietären Protokolls, z.B. eines TCP/IP-basierten Protokolls (z.B. Ethernet, Profibus). Das klassische Automatisierungsgerät 93 ist über eine Verbindung 92 mit seinem TCP/IP-Stack 91 gekoppelt. FIG 5 zeigt zudem einen klassischen Webserver 95 ohne Automatisierungsfunktionalität, welcher mittels seinem TCP/IP-Stack 94 mit dem Internet 80 gekoppelt ist.

Das Problem der aus Sicht der Automatisierungstechnik nicht immer ausreichend leistungsfähigen Internetprotokolle wird somit gelöst, indem den Automatisierungsmodulen 72, 83 des Webservers 70, 71 ein Zugang zum unterlagerten Protokoll-Stack ermöglicht wird. Hierüber kann wie bisher üblich (z.B. mit Ethernet bzw. TCP/TP-Ethernet)) eine proprietäre, schnelle Kommunikation ablaufen. Dies ist natürlich besonders in LAN-Umgebungen (LAN = Local Area Network) interessant.

Zur Erläuterung werden im Folgenden die Grundlagen des in der Beschreibung erwähnten ISO/OSI-Referenzmodells und des TCP/ IP-Protokolls genannt. Zur Beschreibung der Struktur und Funktion von Protokollen für die Datenkommunikation wird häufig ein Architekturmodell zugrundegelegt, das von der International Standards Organisation (ISO) entwickelt wurde. Dieses Basisreferenzmodell namens Open Systems Interconnect (OSI) Reference Model schafft einen Bezugsrahmen für die Behandlung von Themen aus dem Bereich der Datenkommunikation. Das Basisreferenzmodell der ISO besteht aus sieben Schichten (layers). Jede dieser Schichten definiert gewisse Funktionen der Protokolle für die Datenkommunikation, die beim Austausch von Daten zwischen Anwendungen über ein dazwischenliegendes Netzwerk hinweg ausgeführt werden. Jede einzelne Schicht definiert nicht ein Protokoll, sondern stellt vielmehr eine Funktion der Datenkommunikation dar, die von beliebig vielen Protokollen ausgeführt werden kann. Jede Schicht kann mehrere Protokolle enthalten, von denen jedes solche Dienste bereitstellt, wie sie für die Erfüllung der Funktion dieser Schicht benötigt werden. Es ergibt sich das folgende Modell:

Die unterste, erste Schicht definiert die physikalischen Eigenschaften der Übertragungswege und wird deshalb physikalische Schicht (Physical Layer) genannt. Die zweite Schicht, die sogenannte Verbindungssicherungsschicht (Data Link Layer), sorgt für die zuverlässige Übertragung der Daten über die physikalischen Verbindungen. Die dritte Schicht, die Netzwerkschicht (Network Layer), verwaltet die Verbindungen zwischen den Rechnern im Netz für die höheren Schichten. Die vierte Schicht, die sogenannte Transportschicht (Transport Layer), garantiert die fehlerfreie Datenübertragung durch Fehlererkennung und -korrektur. Die fünfte Schicht, genannt Sitzungsschicht (Session Layer), verwaltet die Verbindungen zwischen den Anwendungen. Die sechste Schicht, die Darstellungsschicht (Presentation Layer), standardisiert das Format der Daten auf dem Netz. Die höchste und siebte Schicht schließlich, die Anwendungsschicht (Application Layer), besteht aus den Anwendungen, mit denen man das Netz nutzen kann.

TCP/IP (Transmission Control Protocol / Internet Protocol) ist nicht nur im UNIX-Bereich, sondern auch auf dem PC (DOS, Windows, etc.) der Standard-Protokoll-Stack für die Anbindung an das Internet. Vorteile von TCP/IP sind u.a. die offenen, herstellerunabhängigen Protokollspezifikationen, die Unabhängigkeit von einem bestimmten Netzwerkmedium und die standardisierte Schnittstelle zu Anwendungsprogrammen. Die Protokollarchitektur von TCP/IP basiert im Vergleich zum ISO/OSI-Modell auf vier Schichten. Die unterste Schicht wird Netzzugangsschicht genannt und enthält Routinen für den Zugriff auf physikalische Netze. Sie entspricht den untersten beiden Schichten des ISO/OSI-Modells. Die zweite TCP/IP-Schicht, die Internet-Schicht, definiert den Aufbau von Datagrammen und routet Daten und entspricht somit der dritten OSI-Schicht. Die dritte TCP/IP-Schicht, die Transportschicht, stellt Endzu-End-Datendienste zur Verfügung und entspricht der vierten Schicht des ISO/OSI-Modells. Die vierte TCP/IP-Schicht, die sogenannte Anwendungsschicht, enthält Anwendungen und Prozesse, die auf das Netzwerk zugreifen und entspricht damit den obersten drei Schichten des ISO/OSI-Modells. Die Daten wandern durch die einzelnen Schichten und bekommen in jeder tieferen Schicht einen neuen Header (Kopf) mit Kontrollinformationen hinzugefügt (sogenannte Kapselung). Beim Datentransport von unten nach oben werden diese Zusatzinformationen wieder entfernt.

Der vorgeschlagene Webserver ist Teil eines in einer Client-Server-Architektur aufgebauten Systems verteilter Anwendungen. In einem solchen System ist es die Aufgabe eines Servers als Anbieter eines Dienstes auf Anfragen eines Clients Berechnungen oder andere interne Prozesse durchzuführen und deren Ergebnisse als protokollkonforme Antworten zu formulieren und an den anfragenden Client weiterzugeben. Als Client bezeichnet man dabei ein Gerät oder einen Prozess, welcher den Dienst eines oder mehrerer Server in Anspruch nimmt. Üblicherweise stellt der Server also passiv einen Dienst zur Verfügung und wartet darauf, dass ein Client bei ihm anfragt. Der Client hingegen stellt keine Dienste zur Verfügung sondern nimmt Dienste eines Servers in Anspruch. Ein Server als Anbieter eines Dienstes kann sich dabei auf demselben Gerät wie der Client oder auf einem anderen über ein Netzwerk (z.B. das Internet) erreichbaren Gerät befinden. Die Client-Server-Kommunikation gehorcht gewissen Regeln und formalen Beschreibungen, den so genannten Protokollen. Es ist unabdingbare Voraussetzung für eine erfolgreiche Kommunikation zwischen Client und Server, dass beide Seiten dasselbe Protokoll verwenden. Ein solches Protokoll spezifiziert üblicherweise die Kommunikationskanäle und die Formate mit denen Anmeldung, Informationsaustausch, Anfrage, Antwort und Abmeldung erfolgen. Nicht alle diese Schritte müssen immer explizit angegeben werden, wenn sie für den Anwendungszweck nicht von Belang sind. Protokolle werden auf unterschiedlichsten Abstraktionsebenen spezifiziert und bauen üblicherweise aufeinander auf. Man spricht dann von einem Schichtenmodell (z.B. das oben beschriebene ISO/OSI-Schichtmodell). Während die untersten Schichten die Kommunikation von Hardware und Geräten regeln - es werden elektrische Signale, Kabel oder Funkfrequenzen und deren Eigenschaften spezifiziert, beschäftigen sich mittlere Schichten mit dem Aufbau von Netzwerktopologien (Adressstrukturen und deren Auflösung, Routing und Fehlerkorrektur). Man trennt hier oft die Netzwerkschicht (z.B. IP = Internet Protocol) und die Transportschicht (z.B. TCP = Transmission Control Protocol). Die obersten Schichten bezeichnet man als Anwendungsschicht. Hier wird spezifiziert, wie konkrete Client-Server-Anwendungen miteinander kommunizieren. Beispiele für solche Protokolle der Anwendungsschicht sind HTTP (Hyper Text Transfer Protocol), FTP (File Transfer Protocol) und SMTP (Simple Mail Transfer Protocol).

Zusammengefasst betrifft die Erfindung also einen Webserver mit in den Webserver 70 integrierten Softwaremodulen 72, welcher verschiedene Kommunikationsarten unterstützt. Mindestens ein erstes Softwaremodul 72 weist erste Mittel zur Realisierung einer Automatisierungsfunktionalität und zweite Mittel zum direkten Zugriff auf eine Transportschicht auf.

## Patentansprüche

1. Webserver (70) mit in den Webserver (70) integrierten Erweiterungs-Softwaremodulen (72, 34, 37, 83),
- wobei mindestens eines der integrierten Softwaremodule (72, 34, 37, 83) als Automatisierungsmodul (72, 37, 83) zur direkten Integration einer Automatisierungsfunktionalität ausgebildet ist,
- wobei das mindestens eine Automatisierungsmodul (72, 37, 83) als Regelung und/oder Steuerung von Komponenten sowie Prozessen eines Automatisierungssystems (74,39) von Industrieprozessen ausgebildet ist und wobei das mindestens eine Automatisierungsmodul (72, 37, 83)
- eine erste Verbindung (5, 12, 17, 22, 38, 73) zu den Komponenten sowie den Prozessen des Automatisierungssystems (74, 39) aufweist und charakterisiert **dadurch** dass das mindestens eine Automatisierungsmodul (72,37,83)
- eine zweite Verbindung (75) zum direkten Zugriff auf einen Transportschicht-Protokollstack (77) mit einer Kommunikationsverbindung (78) zur Kommunikation mit einem weiteren Webserver (71) mittels eines proprietären Protokolls aufweist.

2. Webserver nach Anspruch 1,
**dadurch gekennzeichnet,**
**dass** der Webserver (70) eine Verbindung mit einem Kommunikationsnetzwerk, insbesondere dem Internet, aufweist.

3. Webserver nach Anspruch 1 oder 2,
**dadurch gekennzeichnet,**
**dass** zur Kommunikation der Softwaremodule (72) untereinander und zur Kommunikation der Softwaremodule (72) mit Komponenten außerhalb des Webservers (70) Internet-Protokolle vorgesehen sind.

4. Webserver nach einem der vorhergehenden Ansprüche,
**dadurch gekennzeichnet,**
**dass** der Webserver (70) zur Konfiguration und Administration der Softwaremodule (72) vorgesehen ist.

5. Webserver nach einem der vorhergehenden Ansprüche,
**dadurch gekennzeichnet,**
**dass** der Webserver über einen Firewall (8) eine Verbindung (7) mit dem Internet (1) aufweist.

6. Webserver nach einem der vorhergehenden Ansprüche,
**dadurch gekennzeichnet,**
**dass** der Webserver über ein Kommunikationsnetzwerk mit einem Webbrowser (26) als Bedien- und Beobachtungssystem verbunden ist.

7. Webserver nach einem der vorhergehenden Ansprüche,
**dadurch gekennzeichnet,**
**dass** der Webserver ein Echtzeit-Betriebssystem (52) aufweist.

8. Automatisierungssystem mit einem Webserver nach einem der Ansprüche 1 bis 7.

9. Computerprogrammprodukt enthaltend Programmcodemittel zum Erzeugen eines Webservers nach einem der Ansprüche 1 bis 7, wenn besagtes Computerprogrammprodukt auf einem Datenverarbeitungssystem ausgeführt wird.

## Claims

1. Web server (70) with expansion software modules (72, 34, 37, 83) integrated into the web server (70),
- with at least one of the integrated software modules (72, 34, 37, 83) being designed as an automation module (72, 37, 83) for direct integration of an automation functionality,
- with the at least one automation module (72, 37, 83) being designed as a regulator and/or controller of components and processes of an automation system (74, 39) of industrial processes and with the at least one automation module (72, 37, 83)
- having a first connection (5, 12, 17, 22, 38, 73) to the components and the processes of the automation system (74, 39) and **characterised in that** the at least one automation module (72, 37, 83)
- has a second connection (75) for direct access to a transport layer protocol stack (77) with a communication connection (78) for communication with another web server (71) by means of a proprietary protocol.

2. Web server according to claim 1,
**characterised in that** the web server (70) has a connection to a communication network, in particular the internet.

3. Web server according to claim 1 or 2,
**characterised in that** internet protocols are provided for communication between the software modules (72) themselves and communication between the software modules (72) and components outside the web server (70).

4. Web server according to one of the preceding claims,
**characterised in that** the web server (70) is provided to configure and administer the software modules (72).

5. Web server according to one of the preceding claims,
**characterised in that** the web server has a connection (7) to the internet (1) via a firewall (8).

6. Web server according to one of the preceding claims,
**characterised in that** the web server is connected via a communication network to a web browser (26) as the control and monitoring system.

7. Web server according to one of the preceding claims,
**characterised in that** the web server has a real-time operating system (52).

8. Automation system with a web server according to one of claims 1 to 7.

9. Computer program product containing program code means for generating a web server according to one of claims 1 to 7, if said computer program product is run on a data processing system.

## Revendications

1. Serveur web (70) ayant des modules logiciels d'extension (72, 34, 37, 83) intégrés dans le serveur web (70),
- au moins l'un des modules logiciels intégrés (72, 34, 37, 83) étant conçu comme un module d'automatisation (72, 37, 83) pour l'intégration directe d'une fonctionnalité d'automatisation,
- ce ou ces modules d'automatisation (72, 37, 83) étant conçus comme régulation et/ou commande de composants ainsi que de processus d'un système d'automatisation (74, 39) de processus industriels, et ce ou ces modules d'automatisation (72, 37, 83) comportant
- une première liaison (5, 12, 17, 22, 38, 73) vers les composants ainsi que les processus du système d'automatisation (74, 39), et **caractérisé par le fait que** ce ou ces modules d'automatisation (72, 37, 83) comportent
- une deuxième liaison (75) pour l'accès direct à une pile de protocole de couche transport (77) avec une liaison de communication (78) pour la communication avec un autre serveur web (71) au moyen d'un protocole propriétaire.

2. Serveur web selon la revendication 1,
**caractérisé par le fait que** le serveur web (70) comporte une liaison avec un réseau de communication, notamment avec Internet.

3. Serveur web selon la revendication 1 ou 2,
**caractérisé par le fait que** des protocoles Internet sont prévus pour la communication des modules logiciels (72) entre eux et pour la communication des modules logiciels (72) avec des composants en dehors du serveur web (70).

4. Serveur web selon l'une des revendications précédentes,
**caractérisé par le fait que** le serveur web (70) est prévu pour la configuration et la gestion des modules logiciels (72).

5. Serveur web selon l'une des revendications précédentes,
**caractérisé par le fait que** le serveur web comporte par l'intermédiaire d'un pare-feu (8) une liaison (7) avec Internet (1).

6. Serveur web selon l'une des revendications précédentes,
**caractérisé par le fait que** le serveur web est relié par l'intermédiaire d'un réseau de communication à un navigateur web (26) comme système de commande et d'observation.

7. Serveur web selon l'une des revendications précédentes,
**caractérisé par le fait que** le serveur web comporte un système d'exploitation en temps réel (52).

8. Système d'automatisation avec un serveur web selon l'une des revendications 1 à 7.

9. Programme informatique contenant des moyens formant code de programme pour produire un serveur web selon l'une des revendications 1 à 7, lorsque ledit programme informatique est exécuté sur un système informatique.
